# EUROPEAN PATENT APPLICATION

(11) **EP 2 101 070 A1**
(43) Date of publication of application: **16.09.2009**
(21) Application number: 08102445.7
(22) Date of filing: 10.03.2008
(51) Int. Cl.: F16B 31/02

(54) **A device for indicating the tensioning of a fastening member, such as a screw or the like**

(71) Applicant: Rockwool International A/S, 2640 Hedehusene (DK)
(72) Inventor: Strüwing, Christian, 2200 Copenhagen N (DK); Nielsen, Steffen, 2000 Frederiksberg (DK)
(74) Representative: HOEIBERG A/S

(57) **Abstract**

The invention concerns a device (1) for indicating the tensioning of a fastening member, such as a screw or the like, said device comprising a first sheet portion (11) with a first fastening member receiving aperture (15); a second sheet portion (12) with a second fastening member receiving aperture (15) in alignment with said first fastening member receiving aperture, and a joining portion (13) connecting said first and second sheet portions allowing the first and second portions to be biased towards each other by the head of the fastening member in response to the tightening of said fastening member, wherein the device (1) is provided with irreversible indicator means for indicating that the tension in the elongated fastener during the mounting process has exceeded a predetermined tension value, and wherein said irreversible indicator means is such that said first sheet portion (11) is provided with a distal end portion (28) adapted for sliding and locking engagement with corresponding indicator means provided on the second portion (12), and that sad locking engagement indicates that the relative displacement between the first and second sheet portions has exceeded a predetermined value.

## Description

In the present application all references to patents and patent applications are incorporated by reference.

The present invention relates to a device for indicating the tensioning of a fastening member, such as a screw or the like, said device comprising a first portion with a first fastening member receiving aperture; a second portion with a second fastening member receiving aperture in alignment with said first fastening member receiving aperture, and a joining portion connecting said first and second sheet portions allowing the first and second portions being biased towards each other by the head of the fastening member in response to the tightening of said fastening member. The invention also relates to a mounting system with one or more of such devices.

From US 4,572,717 is known a tension indicating device which has an indicating arm and reference means carried by a stamped generally frustoconical spring washer. The arm and the reference means mechanically engage each other and the arm is designed to be visually discernable from a distance in response to the tension of a screw as the frustoconical spring washer is flattened due to tightening of the screw whereby the arm is loosened from its engagement with the reference means.

From US 4,988,246 is known an apparatus for indicating incomplete and complete fastening of a screw. The apparatus includes a washer and a ring of a generally flat synthetic resin sheet. The washer includes a pair of washer portions of a generally flat, round shape and a joint portion interconnecting the washer portions to face them in opposite directions to enable the washer portions to receive a shank of a screw in the openings thereof. The lengthwise section of the joint portion forms generally a U shape. The ring is made of a generally round, deformable material and is inserted between the pair of washer portions thus facing each other. The deformable material is expanded radially outward, when compressed by the washer portions receiving the shank of the screw when fastened. Upon the compressive force reaching a predetermined value, the ring will be broken due to the pair of washer portions overlaying one another.

The known tension indicating devices are able to indicate if a screw is incompletely fastened as a first part is mounted onto a second part. Furthermore there is known that for some purposes, the two parts must be mounted to one another with a predetermined tension in the screw. For this purpose, torque indication tools are provided to ensure that the screw is not mounted with excessive tension, so that damage of the parts may be prevented.

However, by the invention it is realised that these torque limiting mounting tools may be insufficient to achieve a satisfactory predetermined tension in the screw. Moreover, it is also important that the indication is correct so that the indication by the indication devices by a visual inspection, e.g. a day or two later, does not reveal an erroneous result.

Hence, it is an object of the invention to provide a tension indicating device which is capable of indicating that the screw has been subjected to a required loading during mounting.

The object is achieved by a tension indicating device of the initially mentioned kind, wherein the device is provided with irreversible indicator means for indicating that the tension in the elongated fastener during the mounting process has been exposed to a tension exceeded a predetermined tension value, and wherein said irreversible indicator means comprises that said first portion is provided with a distal end portion adapted for sliding and locking engagement with corresponding indicator means provided on the second portion, and that said locking engagement indicates the occurrence of the relative displacement between the first and second portions have exceeded the predetermined value.

Whereas torque limiting tools are only suitable for mounting screws or bolts with a predetermined tension in metal parts, the invention provides a tension indicating device which is suitable for mounting elements, such as building insulation and cover panels, onto a concrete wall or the like, where the receiving inner part, such as a concrete or brick wall, is likely to be damaged if the screw is tightened too much, i.e. provided with too much tension. This may cause the brittle concrete or brick wall to be deteriorated in the hole which is produced by a self-tapping screw. On the other hand, if the screw is not sufficiently fastened, the insulation may not be correctly mounted and the required friction forces are not established in the wall system. According to the invention, the tension indicating device will leave a permanent visible indication about the tension in the screw, and it can therefore be visibly seen, if the particular screw cannot be expected to contribute sufficiently to the retention of the insulation and the outer wall of the wall system onto the inner wall.

In particular, the invention is advantageous in relation to an insulating wall system for a building structure of the kind disclosed in WO 2007/110244 where the wall system comprises an inner wall having an exterior surface with insulation material attached to said exterior surface of said inner wall by elongated fastening members, such as screws, extending through at least one insulation mounting profile and the insulation material so that the insulation material is fixed to the first wall, wherein elongated fastening members are mounted substantially perpendicular to the exterior surface of the inner wall and wherein the elongated fastening members are mounted prestressed with a predetermined amount of tension so that frictional forces between the insulation member and the inner wall and the one or more outer wall members, respectively, are provided. Hereby, frictional forces between the insulation member and the first wall and the second wall, respectively, are provided that are sufficient to transfer the weight of the second wall to the first wall exclusively by establishing a friction force between the insulation and the second wall and between the insulation and the first wall. When the prestressed mounting of the fastening screws is important in order to establish frictional forces between the insulation and the inner wall and the insulation and the mounting profiles, any loss of mounting force in any of the screws may have an adverse effect on the frictional mounting of the insulation, and may even be critical if the sufficient frictional forces are not produced due to bad mounting of one or more of the screws.

By the invention, there is provided a tension indicating washer device which can visibly indicate if the tension in a screw has reached a predetermined value during the mounting. This will enable an inspection to reveal any poorly mounted screws in the mounting of an insulation carrying sub-structure for a building façade, so that any such poorly mounted screws may be tightened or replaced.

In a preferred embodiment, the distal end portion comprises an inclined abutment surface which is to be engaged by the indicator means on the second portion. Moreover, the irreversible indicator means are preferably provided opposite to said joining portion relative to the fastening member receiving aperture. Hereby, a spring force is ensured during the mounting of the screw and it is ensured that the "locking" of the tension indicating device will first occur when the screw has been subjected to the predetermined amount of tension force.

In a first embodiment, the distal end portion is an inclined sheet portion formed in the first portion bending away from the second portion. Moreover, the device is formed integrally in one metal sheet, such as spring steel. Hereby, a simple tension indicating device is provided.

In a second embodiment, the device is made of a plastic material, such as polyethylene or the like, preferably made by injection moulding. This is advantageous since any deterioration of the device due to corrosion is eliminated. Moreover, it is inexpensive to produce in large quantities.

In this second embodiment, the device is preferably designed with the joining portion at one end and with the first and second portions extend laterally from said joining portion with a gap between said first and second portions, so that the first portion is adapted to being biased into the second portion so that the distal end of the first portion is pressed and eventually locked to the second portion.

In a second aspect of the invention, there is provided a mounting system comprising an elongated mounting profile comprising a base portion and two side flanges projecting out of the plane of the base portion defining the internal width of said base portion, and said base portion being provided with mounting holes for receiving a fastening screw; a device for indicating the tensioning of a fastening member, such as a screw or the like, said device comprising a first portion with a first fastening member receiving aperture; a second portion with a second fastening member receiving aperture in alignment with said first fastening member receiving aperture, and a joining portion connecting said first and second sheet portions allowing the first and second portions are biased towards each other by the head of the fastening member in response to the tightening of said fastening member, wherein the device is provided with irreversible indicator means for indicating that the tension in the elongated fastener during the mounting process has been exposed to a tension exceeded predetermined tension value, and wherein said irreversible indicator means comprises that said first portion is provided with a distal end portion adapted for sliding and locking engagement with corresponding indicator means provided on the second portion, and that said locking engagement indicates the occurrence of the relative displacement between the first and second portions have exceeded predetermined value.

In a mounting system for a substructure, such as described above, the advantage of a device according to the first aspect of the invention is that the tension indicating device may be easily positioned in the profiles before the fasting screws are inserted through the profiles. Moreover, the device is preferably provided with a width which is less than the internal width of said base portion of the elongated mounting profile so that an accurate fit of the tension indicating device in the mounting profile can be achieved.

In the following the invention is described in more detail with reference to the accompanying drawings, in which:
- figure 1: is a perspective view of a tension indicating device according to a first embodiment of the invention;
- figure 2: is a side view of same;
- figure 3: is a perspective view of a tension indicating device according to a second embodiment of the invention,
- figures 4 and 5: are schematic side views of a tension indicating device according to the invention explaining the function thereof;
- figure 6: is a schematic cross-section view of a mounting system with a tension indicating device according to the invention;

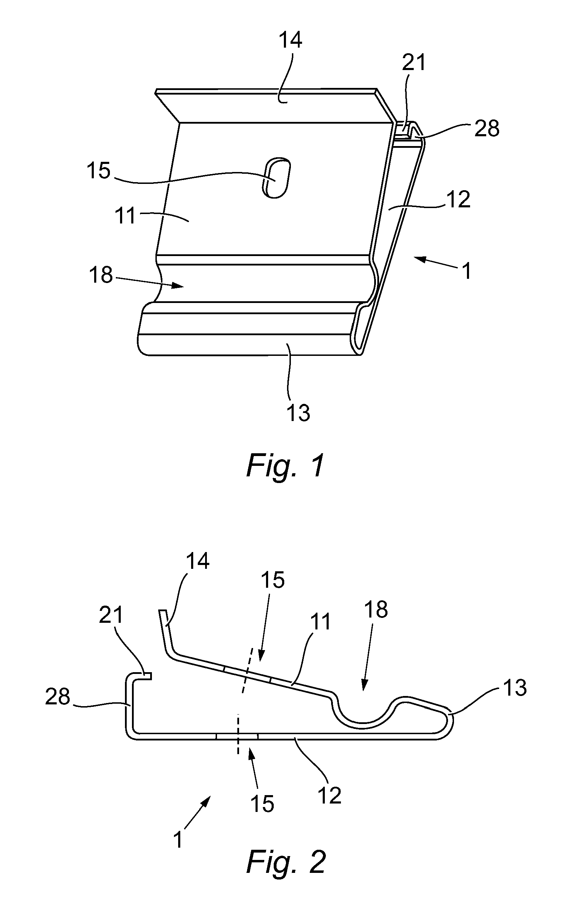

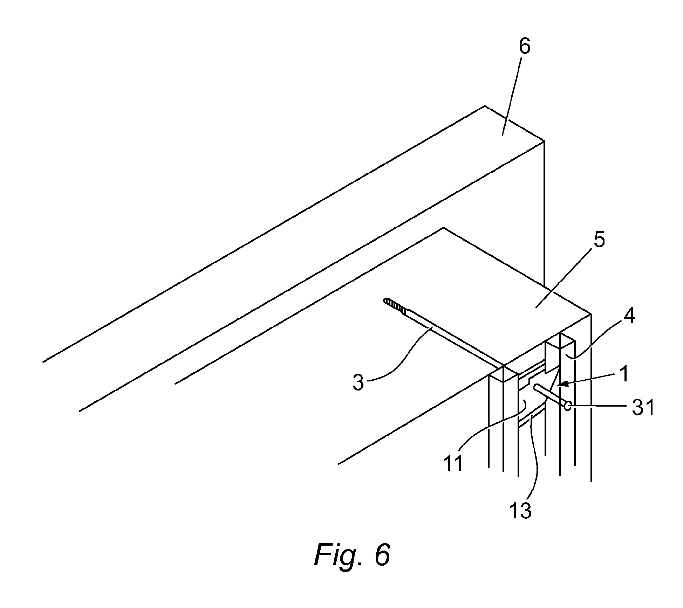

With reference to figures 1 and 2, an embodiment of the invention is shown. According to this embodiment, the indicator device 1 also serves the function of support member as it is designed with a width corresponding to the inside space of the profile 4 (see fig. 6). According to the first embodiment, the indicator device 1 is preferably made of steel having good spring properties and designed as a leaf spring. Accordingly, the indicator device 1 is provided as a generally U-shaped bent sheet metal and comprises a first sheet portion 11 and a second sheet portion 12 jointed by a bending joining portion 13. At the unloaded rest position of the indicator device 1 (as shown in figures 1 to 2), the first and second portions 11, 12 of the indicator device 1 are provided with a mutual angular diversion. The second portion 12 is provided with a reference portion 28 having a distal indicator portion 21 which is integrally formed by bending the distal end of the second portion 12. The distal end of the first portion 11 is designed with an inclined locking portion 14 which cooperates with the distal indicator portion 21. Hereby, the locking portion 14 is sliding on the indicator portion 21 as the first portion 11 is biased towards the second portion 12 when the indicator device 1 is subjected to a load from a screw which is provided through the fastener receiving hole 15 provided adjacent the distal end 14 of the first portion 11. When the sufficient tension in the screw is achieved, the distal end portion 14 is designed such that at this moment it is pressed beyond the indicator portion 21 and the tension in the angled distal end portion 14 is released and therefore snaps into a locked position inside the indicator portion 21. Hereby, the first portion 11 is locked in the second portion 12 and thereby serves as an indicator indicating that the correct tension in the screw has been achieved.

In a preferred embodiment, the distal locking portion 14 is provided as a sheet portion with an angle of approx. 110° relative to the first portion 11. The reference portion 28 is preferably bent into a perpendicular position relative to the second portion 12, and the indicator portion 21 is formed with a perpendicular angle relative to the reference portion 28.

The second portion 11 may be provided with a bulge 18 which is subjected to bending forces when the indicator device 1 is loaded as the screw is tightened. The shape and in particular the radius of the semi-circular shape of this bulge 18 may be chosen in accordance with the desired bending resistance and thereby which specific tension force the tension indicating device according to the invention is designed to indicate.

The indicator device 1 according to the first embodiment is preferably made in a steel or other metals or metal alloys with good spring properties.

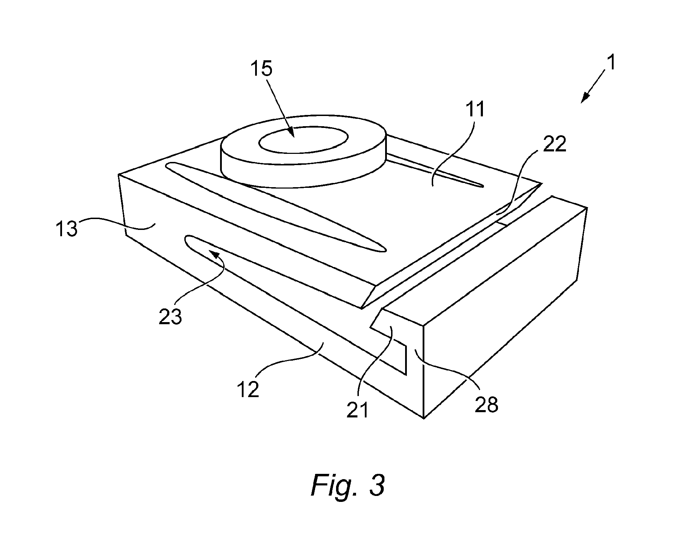

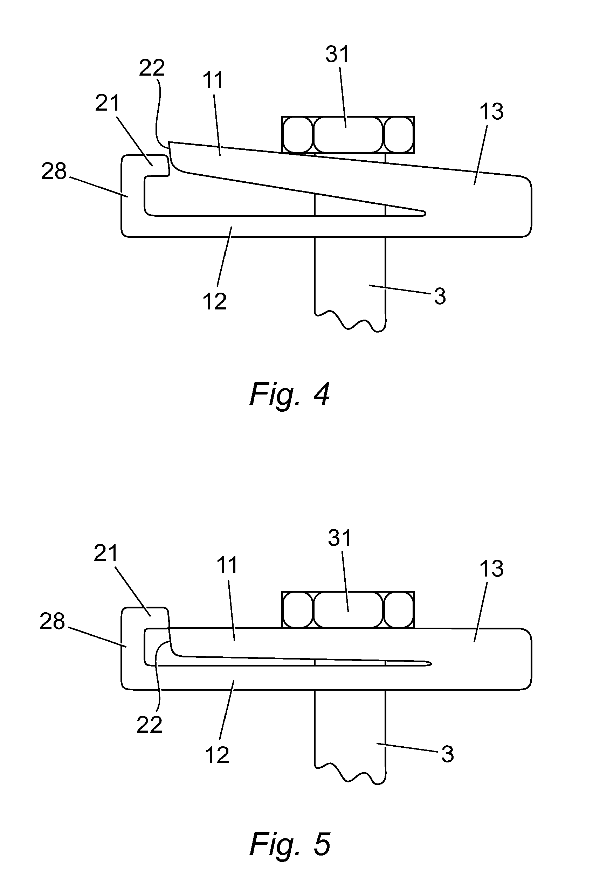

With reference to fig. 3, there is provided a second embodiment of an indictor device according to the invention. According to this second embodiment, the tension indicating device is made in plastic by an injection moulding process or the like. The device 1 is integrally formed with a first portion 11 and a second portion 12 and a joining portion 13 at a first side. From this first side, the first and second portions 11, 12 extend from this joining portion 13 with a gap 23 between them. At a second side opposite the first side, the second portion 12 is provided with an upright reference portion 28 generally perpendicular to the plane in which the second portion 12 generally extend in. The reference portion 28 is also provided with an indicator portion 21 which is shaped as an inwardly protruding member with an inclined end surface as its distal end for cooperating with the distal end surface 22 of the first portion 11. A fastener receiving hole 15 is provided extending through both the first and second portion in a certain distance from the joining portion 13. With reference to figures 3, 4 and 5, the first portion 11 is designed with dimensions so that the distance from the distal end surface 22 to the joining portion 13 is slightly larger than the distance from the distal surface of the indicator portion 21 to the joining portion 13. Hereby, the reference portion 28 is pushed slightly outwards during the mounting of the screw as the first portion 11 is forced towards the second portion 12 and thereby angularly displaced until the exerted force reaches the predetermined limit where the first portion 11 is biased so much towards the second portion 12 that the distal end surface 22 looses contact with the indicator portion 21 whereby the reference portion 28 snaps back and locks the first portion 11 in this angularly displaced configuration (see also fig. 5).

The device 1 in fig. 3 may be designed with a width corresponding to the inside space of the profile 4 (see fig. 6), but it might as well be narrower.

In a preferred embodiment where the indicator device is used in a wall system using mineral wool elements that are secured to a wall by metal profiles, the tension in the fastening members, such as screws, should be at least 1500-1700 N. This means that the force required for locking the first and second portions together should be between 1500 and 1700 N.

In figure 6, an advantageous use of the tension indicating device according to the invention is shown, where the device is used by the mounting of a profile 4, which holds an insulation material 5 onto an inner wall 6. The screws 3 used for such mounting may be self-tapping screws 3 or screws mounted in pre-mounted plugs. In such substructure for a building cover, it is desirable that the screws 3 have the correct tension when mounted, so that the insulation material 5 is pressed against the inner wall 6 with a sufficient force to create the required friction between the inner wall 6 and the insulation 5. It is important in this application to be able to detect that all screws 3 have sufficient tension, so that the resulting pressure force between the insulation material and the inner wall has the required value.

The profile 4 is preferably provided with a central portion where the rectangular footprint of the tension indicating device fits into, so that the tension indicating device cannot rotate around the screw when mounted on the profile. Moreover, the device may be pre-mounted in the profile, as the device may be provided with suitable retention means that fits into an opening in the profile 4. Thereby the indicator device 1 can be "clicked" into this opening and retained therein.

A mounting screw 3 is then mounted in the mounting hole 15 and penetrated, such as pressed and/or screwed, through the insulation material 5 and into the inner wall 6, possibly via a plug (not shown). When the screw head 31 makes contact with the first spring portion 11 of the indicator device 1, the indicator device 1 is compressed and the indicator tap 14 is pressed towards the second spring portion 12. When the indicator portion 14 is snapped into its locking portion relative to the indicator portion 21, the correct tension in the screw is achieved, and the profile 4 then presses with the required, predetermined force against the insulation material 5 and the inner wall 6.

Above, the invention is described with reference to some preferred embodiments. However it is realised by the invention that other embodiments may be provided without departing from the scope of the invention as defined in the claims.

## Claims

1. A device for indicating the tensioning of a fastening member, such as a screw or the like, said device comprising
a first portion with a first fastening member receiving aperture;
a second portion with a second fastening member receiving aperture in alignment with said first fastening member receiving aperture, and
a joining portion connecting said first and second sheet portions allowing the first and second portions are biased towards each other by the head of the fastening member in response to the tightening of said fastening member,
**characterised in that**
the device is provided with irreversible indicator means for indicating that the tension in the elongated fastener during the mounting process has been exposed to a tension exceeded a predetermined tension value, and that
said irreversible indicator means comprises that said first portion is provided with a distal end portion adapted for sliding and locking engagement with corresponding indicator means provided on the second portion, and that said locking engagement indicates the occurrence of the relative displacement between the first and second portions have exceeded a predetermined value.

2. A device according to claim 1, wherein the distal end portion comprises an inclined abutment surface with is to be engaged by the indicator means on the second portion.

3. A device according to any of the preceding claims, wherein the irreversible indicator means are provided opposite to said joining portion relative to the fastening member receiving aperture.

4. A device according to any of the preceding claims, wherein the distal end portion is an inclined portion formed in the first portion and sloping away from the second portion.

5. A device according to any of the preceding claims, wherein the device is formed integrally in one metal sheet.

6. A device according to any of the preceding claims, wherein the device is made of a plastic material, such as polyethylene or the like, preferably made by injection moulding.

7. A device according to any of the preceding claims, wherein the joining portion is provided at one end and with the first and second portions extending laterally from said joining portion with a gap between said first and second portions.

8. A device according to claim 7, wherein the first portion is adapted to being biased into the second portion so that the distal end of the first portion is pressed and eventually locked to the second portion.

9. A mounting system comprising
an elongated mounting profile comprising
a base portion and two side flanges projecting out of the plane of the base portion defining the internal width of said base portion, and said base portion being provided with mounting holes for receiving a fastening screw;
a device for indicating the tensioning of a fastening member, such as a screw or the like, said device comprising
a first portion with a first fastening member receiving aperture;
a second portion with a second fastening member receiving aperture in alignment with said first fastening member receiving aperture, and
a joining portion connecting said first and second sheet portions allowing the first and second portions are biased towards each other by the head of the fastening member in response to the tightening of said fastening member, wherein the device is provided with irreversible indicator means for indicating that the tension in the elongated fastener during the mounting process has been exposed to a tension exceeded a predetermined tension value, and wherein said irreversible indicator means comprises that said first portion is provided with a distal end portion adapted for sliding and locking engagement with corresponding indicator means provided on the second portion, and that said locking engagement indicates the occurrence of the relative displacement between the first and second portions have exceeded a predetermined value.

10. A mounting system according to claim 9, wherein the distal end portion comprises an inclined abutment surface with is to be engaged by the indicator means on the second portion.

11. A mounting system according to claim 9 or 10, wherein the irreversible indicator means is provided opposite to said joining portion relative to the fastening member receiving aperture.

12. A mounting system according to any of claims 9 to 11, wherein the distal end portion is an inclined portion formed in the first portion and sloping away from the second portion.

13. A mounting system according to any of claims 9 to 12, wherein the device is formed integrally in one metal sheet.

14. A mounting system according to any of claims 9 to 13, wherein the device is made of a plastic material, such as polyethylene or the like, preferably made by injection moulding.

15. A mounting system according to any of claims 9 to 14, wherein the joining portion is provided at one end at that the first and second portions extend laterally from said joining portion with a gap between said first and second portions.

16. A mounting system according to claim 15, wherein the first portion is adapted to being biased into the second portion so that the distal end of the first portion is pressed and eventually locked to the second portion.
